# EUROPEAN PATENT APPLICATION

(11) **EP 3 098 922 A1**
(43) Date of publication of application: **30.11.2016**
(21) Application number: 16170568.6
(22) Date of filing: 20.05.2016
(51) Int. Cl.: H02J 1/00, H02J 1/10, G06F 1/26, H02J 7/00

(54) **ELECTRONIC DEVICE AND METHOD FOR CONTROLLING DYNAMIC POWER**

(30) Priority: 29.05.2015 KR 20150076705
(71) Applicant: Samsung Electronics Co., Ltd., Gyeonggi-do 16677 (KR)
(72) Inventor: Koo, Ja-Goun, 16677 Gyeonggi-do (KR)
(74) Representative: HGF Limited

(57) **Abstract**

The present disclosure relates to an electronic device for controlling power and a method thereof. An electronic device for controlling power includes: a plurality of ports configured to input power into the electronic device; a power controller that includes a first power conversion unit configured to convert a first power supplied from a first external device connected to a first port, and a second power conversion unit configured to convert a second power supplied from a second external device connected to a second port; and a controller that controls the power controller to selectively supply power to a target device by summing the first power and the second power.

## Description

### TECHNICAL FIELD

The various embodiments of the present disclosure relate to control of power input/output, more specifically control of power from a plurality of sources

### BACKGROUND

Generally, electronic devices such as a note PC, a laptop, a tablet PC, or a smart phone have had their dimensions gradually reduced over time to reduce form factor so that the electronic devices are smaller and therefore more mobile. The electronic device may include a single power input port for power input, or one or more input/output ports, such as an USB port, for data communication and power input/output.

According to recent trends, the USB Implementers Forum (USB-IF) has established standards for a new USB type-C connector and cable, which are designed to be mountable without distinguishing between the upside or downside thereof, have high speeds for data transfer, and where the connector and receptacle are smaller than those for the USB type-A connector. The USB type-C connector and the cable support an USB Power Delivery (PD) standard to enable power supply up to 100W.

As standardization of power input ports of the electronic devices have proceeded, the possibility of using the USB type-C as the power supply device (e.g., an AC/DC adapter) of the electronic device is increasing given concerns such as mobility, usability, and design costs.

### SUMMARY

The conventional electronic device can receive power through a single power input port, or enables data communication and power input/output through one or more input/output ports.

However, although the conventional electronic device includes the one or more input/output ports, power is usually received through an external single power input port according to the amount of power required by the electronic device thus increasing the size and weight of a power supply device.

Therefore, in order to enhance mobility and performance of the electronic device and increase usage time, an efficient design and control of the power input/output is required.

The various embodiments of the present disclosure provide an electronic device for power control and a method thereof.

In accordance with an aspect of the present disclosure, an electronic device is provided for controlling power. The electronic device may include: a plurality of ports configured to input power into the electronic device; a power controller that includes a first power conversion unit configured to convert a first power supplied from a first external device connected to a first port, and a second power conversion unit configured to convert a second power supplied from a second external device connected to a second port; and a controller that controls the power controller to selectively supply power to a target device by summing the first power and the second power.

In accordance with another aspect of the present disclosure, there is provided a method of controlling power in an electronic device. The method may include: receiving a first power from a first external device connected to a first port configured to input power into the electronic device; receiving a second power from a second external device connected to a second port configured to input power into the electronic device; converting at least one of the first power and the second power; and selectively supplying power to a target device by summing the first power and the second power.

In the various embodiments of the present disclosure, power inputs through a USB power input/output port and a power port are summed so that a high-capacity power required by the electronic device can be supplied.

Further, in various embodiments of the present disclosure, a plurality of powers input from an external device such as a small-sized laptop, a tablet PC, or a smart phone are combined, and then a high-capacity power for maximum performance of the electronic device is supplied or power is received in a state in which performance or a function of the electronic device is not limited so that a charge speed of the battery included in the electronic device may be improved.

Further, in various embodiments of the present disclosure, even though a high-capacity AC/DC adapter is not used, since high-capacity power using the type-C USB power input/output port can be secured whenever and wherever it is required, the mobility of the electronic device can be improved and design costs can be reduced.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 illustrates a network environment 100 including an electronic device according to one embodiment of the present disclosure;
FIG. 2 illustrates a configuration of a system for power input/output including an electronic device and a plurality of external devices according to one embodiment of the present disclosure;
FIG. 3 illustrates a detailed configuration of an electronic device according to one embodiment of the present disclosure;
FIG. 4 illustrates a detailed configuration of a first power conversion unit corresponding to a DC power port according to one embodiment of the present disclosure;
FIG. 5 illustrates a detailed configuration of a second power conversion unit corresponding to a first USB input/output port according to one embodiment of the present disclosure;
FIG. 6 illustrates a detailed configuration of a fourth power conversion unit corresponding to a third USB output port according to one embodiment of the present disclosure;
FIG. 7 illustrates a detailed configuration of a portable electronic device applying power conversion units in FIGS. 4, 5, and 6 according to one embodiment of the present disclosure;
FIG. 8 is a flowchart illustrating a process of processing power input/output by a controller during the power input/output according one embodiment of the present disclosure; and
FIG. 9 is a flowchart illustrating a process of processing power input/output by a controller during the power input/output in a state in which the electronic device is not operated according to one embodiment of the present disclosure.

### DETAILED DESCRIPTION

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. As another example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposed between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device. Further, the controllers and control units described herein may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc.

The terms used herein are merely for the purpose of describing particular embodiments and may not be intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person of ordinary skill in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit).

According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV set-top box (e.g., Samsung HomeSync^{™}, Apple TV^{™}, or Google TV^{™}), a game console (e.g., Xbox^{™} and PlayStation^{™}), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyrocompass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments of the present disclosure will be described with reference to the accompanying drawings. In the present disclosure, the term "user" may indicate a person using an electronic device or a device (e.g. an artificial intelligence electronic device) using an electronic device.

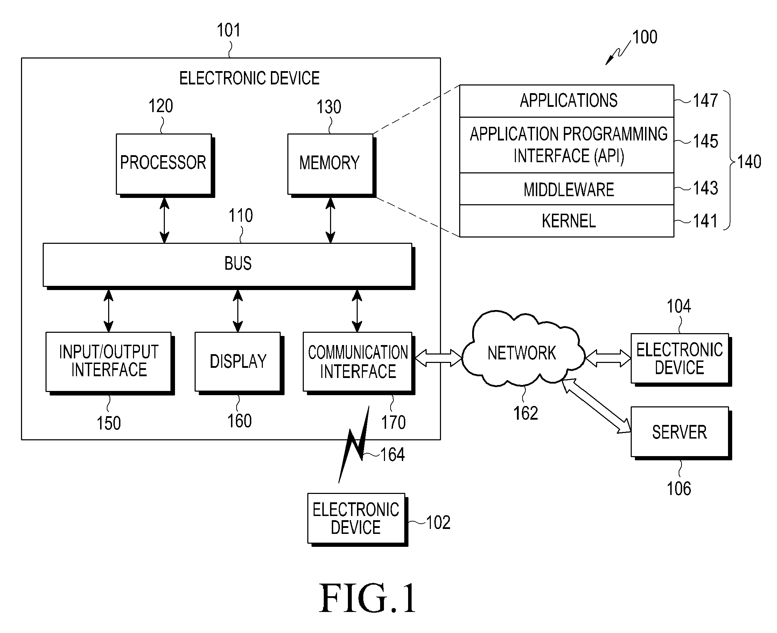

The electronic device 101 in a network environment 100 according to various embodiments is described with reference to FIG. 1. The electronic device 101 may include a bus 110, a processor 120, a memory 130, an input/output interface 150, a display 160, and a communication circuit 170. In some embodiments, the electronic device 101 may omit at least one of the elements, or may further include other elements.

The bus 110 may include, for example, a circuit for connecting the elements 110, 120, 130, 140, 150, 160, and 170 and transferring communication (for example, control messages and/or data) between the elements.

The processor 120 may include one or more of a Central Processing Unit (CPU), an Application Processor (AP), and a Communication Processor (CP). For example, the processor 120 may carry out operations or data processing relating to control and/or communication of at least one other element of the management device 101.

The memory 130 may include a volatile memory and/or a non-volatile memory. The memory 130 may store, for example, instructions or data related to at least one other element of the electronic device 101. According to an embodiment, the memory 130 may store software and/or a program 140. The program 140 may include a kernel 141, middleware 143, an Application Programming Interface (API) 145, and/or application programs (or "applications") 147. At least some of the kernel 141, the middleware 143, and the API 145 may be referred to as an Operating System (OS).

For example, the kernel 141 may control or manage system resources (for example, the bus 110, the processor 120, and the memory 130) which are used to execute an operation or a function implemented in the other programs (for example, the middleware 143, the API 145, and the application programs 147). Furthermore, the kernel 141 may provide an interface through which the middleware 143, the API 145, or the application programs 147 may access the individual elements of the electronic device 101 to control or manage the system resources.

The middleware 143, for example, may function as an intermediary for allowing the API 145 or the application programs 147 to communicate with the kernel 141 to exchange data.

In addition, the middleware 143 may process one or more task requests received from the application programs 147 according to priorities thereof. For example, the middleware 143 may assign priorities for using the system resources (for example, the bus 110, the processor 120, the memory 130, or the like) of the electronic device 101, to at least one of the application programs 147. For example, the middleware 143 may perform scheduling or load balancing on the one or more task requests by processing the one or more task requests according to the priorities assigned thereto.

The API 145 refers to, for example, an interface for accessing, by the application 147, a function provided from the kernel 141 or the middleware 143. For example, the API 145 may include at least one interface or function (e.g., instructions) for a file control, a window control, an image process, or a character control.

The input/output interface 150 may function as, for example, an interface that may transfer instructions or data input from a user or another external device to the other element(s) of the electronic device 101. Furthermore, the input/output interface 150 may output the instructions or data received from the other element(s) of the electronic device 101 to the user or another external device.

Examples of the display 160 may include a Liquid Crystal Display (LCD), a Light-Emitting Diode (LED) display, an Organic Light-Emitting Diode (OLED) display, a MicroElectroMechanical Systems (MEMS) display, and an electronic paper display. The display 160 may display, for example, various types of contents (for example, text, images, videos, icons, or symbols) for the user. The display 160 may include a touch screen and receive, for example, a touch input, a gesture input, a proximity input, or a hovering input using an electronic pen or a user's body part.

The communication interface 170 may set communication between, for example, the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106).

The wireless communication may use at least one of, for example, Long Term Evolution (LTE), LTE-Advance (LTE-A), Code Division Multiple Access (CDMA), Wideband CDMA (WCDMA), Wireless Broadband (WiBro), and Global System for Mobile Communications (GSM), as a cellular communication protocol. In addition, the wireless communication may include, for example, short range communication 164. The short-range communication 164 may be performed by using at least one of, for example, Wi-Fi, Bluetooth, Near Field Communication (NFC), and Global Navigation Satellite System (GNSS). Hereinafter, in the present disclosure, the "GPS" may be interchangeably used with the "GNSS". The wired communication may include at least one of, for example, a Universal Serial Bus (USB), a High Definition Multimedia Interface (HDMI), Recommended Standard 232 (RS-232), and a Plain Old Telephone Service (POTS). The network 162 may include at least one of communication networks such as a computer network (for example, a LAN or a WAN), the Internet, and a telephone network.

Each of the first and second external electronic devices 102 and 104 may be a device which is the same as or different from the electronic device 101. According to an embodiment of the present disclosure, the server 106 may include a group of one or more servers. According to another embodiment of the present disclosure, all or some of the operations that may be performed in the electronic device 101 may be performed in another electronic device or a plurality of electronic devices (e.g., the electronic devices 102 and104 or the server 106). According to an embodiment of the present disclosure, when the electronic device 101 has to perform a function or service automatically or in response to a request, the electronic device 101 may request another device (e.g., the electronic devices 102 and 104, or the server 106) to perform at least some functions relating thereto. Another electronic apparatus (e.g., the electronic devices 102 and 104, or the server 106) may execute the requested functions or the additional functions, and may deliver a result of the execution to the electronic device 101. The electronic device 101 may output the received result as-is or additionally process the received result to provide the requested functions or services. To achieve this, for example, cloud computing, distributed computing, or client-server computing technology may be used.

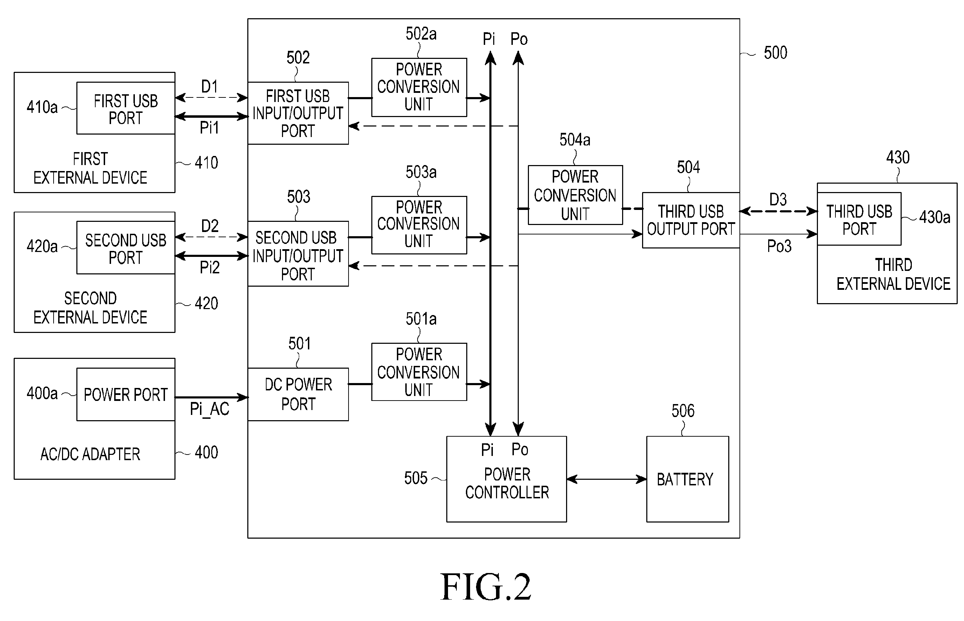

FIG. 2 illustrates a configuration of a system for power input/output including an electronic device and a plurality of external devices according to one embodiment of the present disclosure.

An embodiment of the present disclosure may include a plurality of external devices and an electronic device. In particular, the plurality of external devices may include an AC/DC adapter for a large-capacity power supply.

According to FIG. 2, the system may include an AC/DC adapter 400 including a power port 400a, an external device 410 including a fist USB port 410a, a second external device 420 including a second USB port 420a, a third external device 430 including a third USB port 430a, and an electronic device 500.

The power port 400a included in the AC/DC adapter 400 may be implemented in the Barrel Jack form, and may be connected to a DC power port 501 in the DC Jack form of the electronic device 500.

The first USB port 410a of the first external device 410 and the second USB port 420a of the second external device 420 may be implemented in the type-c form supporting an USB PD, thereby connecting to a first USB input/output port 502 and a second USB input/output port 503 of the electronic device 500 so as to enable bidirectional data communication and power input/output with the electronic device 500.

The third output USB port 430a of the third external device 430 may be implemented in the type-c form supporting the USB PD, thereby connecting to a third USB output port 504 of the electronic device 500 so as to enable bidirectional data communication and power input/output with the electronic device 500.

In an embodiment of the present disclosure, the USB ports may be designed to support the USB PD 2.0 standard. Further, the USB ports may not support certain functions and capacities supported in the USB standard based on costs, complexity, and specifications of a system. For example, the USB ports of the present disclosure may be implemented by a type-C full featured port so that maximum of 100W input/output power can be processed, and bidirectional data communication can be transmitted according to a maximum transmission rate or BandWidth (BW).

The electronic device 500 may further include power conversion units 501a, 502a, 503a, and 504a for converting power (e.g. converting the voltage) of each of the DC power port 501, the first USB input/output port 502, the second USB input/output port 503, and the third USB output port 504. The electronic device 500 may further include a battery 506 and a power controller 505 for summing powers input from the power conversion units 501a, 502a, 503a, and 504a to output the power. In particular, the power controller 505 may sum powers converted by the power conversion units 501a, 502a, 503a, and 504a to transfer the power to the battery 506 or transfer the power to from one port to another port.

In the embodiment of the present disclosure described above, elements may be variously formed by being selected according to entire design specifications of the system.

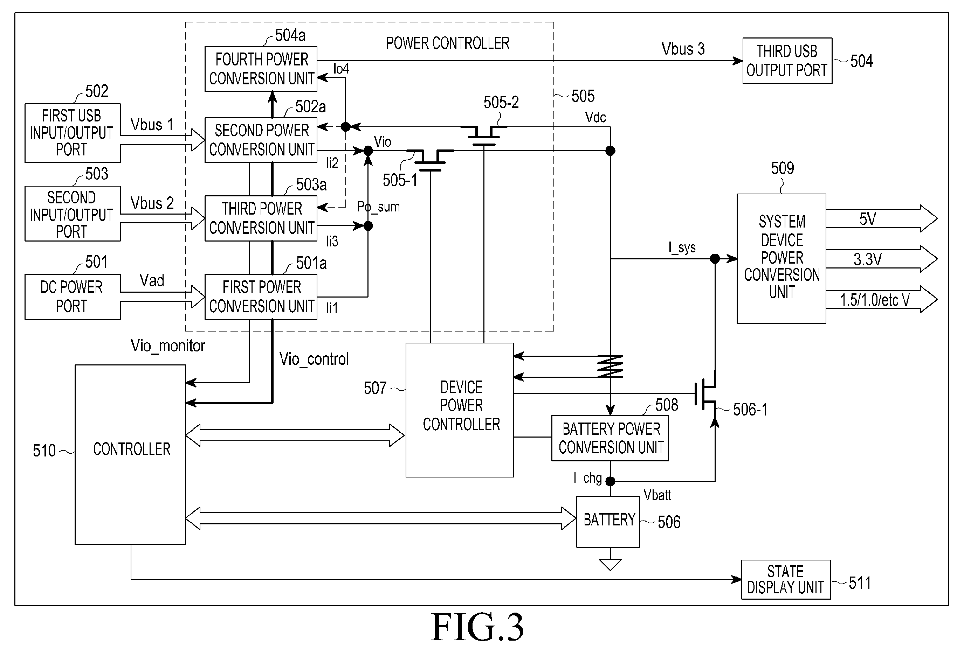

FIG. 3 illustrates a detailed configuration of an electronic device according to one embodiment of the present disclosure.

According to FIG. 3, an electronic device 500 may include a DC power port 501, a first USB input/output port 502, a second USB input/output port 503, a third USB output port 504, a power controller 505, a battery 506, a device power controller 507, a battery power conversion unit 508, a system device power conversion unit 509, a controller 510, and a state display unit 511. In this event, the power controller 505 may include a first power conversion unit 501a, a second power conversion unit 502a, a third power conversion unit 503a, and a fourth power conversion unit 504a.

The DC power port 501 may transfer an input power, which is input from the AC/DC adapter 400, to the first power conversion unit 501a of the power controller 505.

The first USB input/output port 502 may transfer an input power, which is input from the first external device 410, to the second power conversion unit 502a of the power controller 505, and transfer output power, which is input from the second power conversion unit 502a, to the first external device 410.

The second USB input/output port 503 may transfer an input power, which is input from the second external device 420, to the third power conversion unit 503a of the power controller 505, and transfer output power, which is input from the third power conversion unit 503a, to the second external device 420.

The third USB output port 504 may transfer output power, which is input from the fourth power conversion unit 504a, to the third external device 430.

The power controller 505 may sum the input powers which are input through the DC power port 501, the first USB input/output port 502, and the second USB input/output port 503. In particular, the power controller 505 may include the first power conversion unit 501a for converting the voltage (Vad) of the input power input through the DC power port 501, the second power conversion unit 502a for converting the voltage (Vbus1) of the input power input through the first USB input/output port 502, the third power conversion unit 503a for converting the voltage (Vbus2) of the input power input through the second USB input/output port 503, and the fourth power conversion unit 504a for converting the voltage of the output power into voltage Vbus3. Further, the power controller 505 further includes a switch, and may transfer the summed input power when the power is input, or transfer output power to each of the power conversion units 501a, 502a, 503a, and 504a when the power is output.

The first power conversion unit 501a may output a first power (Ii1) by converting the voltage (Vad) of the input power.

The second power conversion unit 502a may output a second power (Ii2) by converting the voltage (Vbus1) of the input power.

The third power conversion unit 503a may output a third power (Ii3) by converting the voltage (Vbus2) of the input power.

The fourth power conversion unit 504a may output a fourth power having the fourth voltage (Vbus3) by converting voltage of output power (Io4).

The battery 506 may receive a supply of a combined input power from the power controller 505 or output a supplied output power to the power controller 505.

The device power controller 507 may control a first switch 505-1 to output the summed input power. For example, turning on switch 505-1 allows for the summed input power to be output. The device power controller 507 further may control a second switch 505-2 to transfer the output power from, for example, the battery 506, to the power conversion units to be output to, for example, the external devices. Further, the power output from the battery 506 may control a third switch 506-1. Turning on switch 506-1 allows the transfer of the output power to the system device power conversion unit 509.

The battery power conversion unit 508 may convert an input power (I_chg) input to the battery 506, and then transfer the converted input power to the battery 506.

The system device power conversion unit 509 may transfer the input power outputted from the battery 506 to each element of the electronic device 500.

The controller 510 may control tasks such as voltage conversion of an input power for summing input powers, which are individually input through the DC power port 501, the first USB input/output port 502, and the second USB input/output port 503, charging, power output to the external devices, and detection and control of system performance.

Specifically, the controller 510 may control the power controller 505 to convert voltage of input powers, which are input through the DC power port 501, the first USB input/output port 502, and the second USB input/output port 503, through each of the power conversion units, sum input powers output from each of the power conversion units, and transfer the summed input powers to a target device such as the battery 506, the third external device 430 connected to the third USB output port, or internal components (e.g., CPU, GPU, and LCD) of the electronic device 500.

In detail, the power controller 505 may transfer, to the controller 510, a monitoring signal (Vio_monitor) for monitoring power input and power output. The power controller 505 may detect whether there are input powers input to each of the power conversion units through the DC power port 501, the first USB input/output port 502, and the second USB input/output port 503, or detect whether there are output powers output from each of the power conversion unit to the first USB input/output port 502, and the second USB input/output port 503, and the third USB output port 504 so that a response signal for this can be transferred to the controller 510.
The controller 510 may control the power controller 505 to transfer, to the power controller 505, an input/output control signal (Vio_control) for power input and an output control, such as converting voltages of input powers input through the DC power port 501, the first USB input/output port 502, and the second USB input/output port 503, and then summing the input powers the voltages of which have been converted, or converting the voltages of the output power and then transfer the output to the DC power port 501, the first USB input/output port 502, the second USB input/output port 503, and the third USB output port 504. For example, when the first input power input through the DC power port 501, the second input power input through the first USB input/output port 502, and the third input power input through the second USB input/output port 503 have been detected, the controller 510 may control the power controller 505 to convert each voltage of the first input power, the second input power, and the third input power, and then sum the first input power, the second input power, and the third input power. The conversion for the voltages of the input powers may be determined according to conversion conditions such as whether high-speed charge and full charge for the battery of the electronic device 500 are required, whether supplying power of the external device is required, whether an additional power for improving performance of the electronic device 500 is required, and whether an additional power for performing an operation of the electronic device 500 is required.

Specifically, for example, when a voltage of the first input power input through the DC power port 501 is 20V, a voltage of the second input power input through the first USB input/output port 502 is 5V, and a voltage of the third input power input through the second USB input/output port 503 is 12V, the controller 510 may determine whether a voltage of each of the input powers is converted into a specific voltage according to the conversion conditions. Herein, although the voltages of the powers provided in the USB input/output port are described as 5V, 12V, and 20V, the voltages may be configured to be various voltages.

When it is determined that the high-speed charge for the battery 506 of the electronic device 500 or supplying power to the external device is required, the controller 510 may control the power controller 505 to convert each voltage of the first input power, the second input power, and the third input power into an optimal voltage (Vio) for the high-speed charge or maximum power. For example, when the high-charge for the battery 506 is required, the controller 510 may control the power controller 505 to determine the Vio as 20V which is a voltage (Vbatt) of the battery 506, raise voltages of the second input power and the third input power to 20V, and sum the first input power, the second input power, and the third input power to output a sum of the input powers.

When it is determined that power supply for performance improvement or an operation of the electronic device 500 other than the high-charge for the battery 506 of the electronic device 500 or supplying power to the external device is required, the controller 510 may control the power controller 505 to convert each voltage of the first input power, the second input power, and the third input power into an optimal voltage (Vio) for maximum performance.

For example, when a voltage of the additional power required for performance improvement is 5V, the controller 510 may control the power controller 505 to determine the Vio as 5V, lower a voltage of the first input power to 5V, lower the voltage of the third input power to 5V, and sum the first input power, the second input power, and the third input power to output a sum of the input powers.

Although the embodiment including the power input through the DC power port 501 has been described, voltages of powers input through two or more USB input/output ports may be converted into the optimal voltage without the power input through the DC power port 501, and the converted optimal voltages may be summed, and a sum of the voltages may be then output.

In the embodiment of the present disclosure, although it has been described that the device power controller 507 is configured separately form the controller 510, the device power controller 507 and the controller 510 are configured as one, or the device power controller 507 may be included in the controller 510.

In addition, in the embodiment of the present disclosure, each USB ports may be implemented according to the type-C USB standard (e.g., USB type-C Spec 1.0 and Spec 2.0).

According to the embodiment of the present disclosure, an operation such as power input detection of an individual USB port mounted in the electronic device, a voltage/current level detection of the input power, and an input power (Vbus) control may be implemented through a Configuration Channel (CC) signal line. Further, the operation may be basically interconverted with the USB PD standard, and a legacy power input, which does not follow the USB PD standard such as the AC/DC adapter, can be performed through a separate signal line.

The state display unit 511 may display a state of the battery of the electronic device 500, and states of the electronic port and the USB port. Specifically, the state display unit 511 may display power and performance state of the electronic device 500 such as an input/output state of each of ports, and a whole power state (e.g., a state in which there is no external power input, a state of being fully charged, a state of being charged, and a state in which an additional power input for the performance improvement is inputting) of the electronic device 500. The state display unit 511 can be implemented by software, hardware using an LED, and a combination of software and hardware.

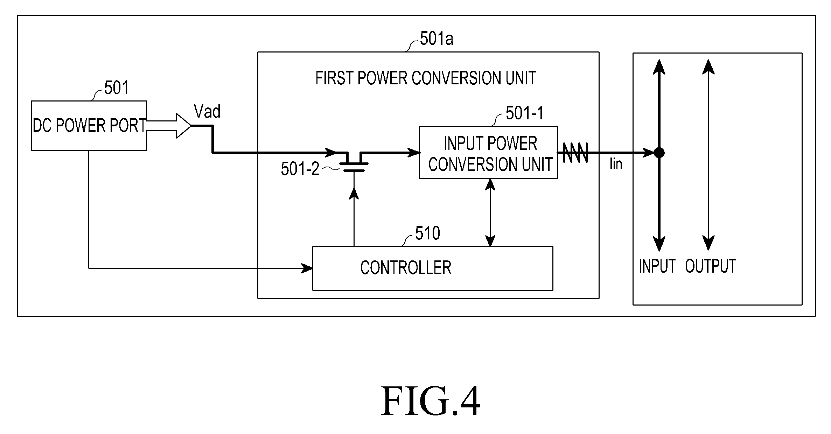

FIG. 4 illustrates a detailed configuration of a first power conversion unit corresponding to a DC power port according to one embodiment of the present disclosure

When power has been input according to FIG. 4, a DC power port 501 transfers an input power to a first power controller 501a. In this event, the DC power port 501 may transfer a detection signal to a controller 510 through a signal line connected to the controller 510.

The controller 510 receiving the detection signal may control the first power conversion unit 501a to convert a voltage of the input power and then output the converted voltage. In this event, the controller 510 may control a switch 501-2 to allow the input power to be transferred to an input power conversion unit 501-1 of the first power conversion unit 501a.

The input power conversion unit 501-1 included in the first power conversion unit 501a may convert the voltage of the input power into a voltage which can be used in the electronic device 500, and then output the converted voltage.

In an embodiment of the present disclosure, when there is power input from an AC/DC adapter, the first power conversion unit 501a may be configured to configure a voltage input from the AC/DC adapter as a default input voltage, and also convert power from a USB port into an AC voltage.

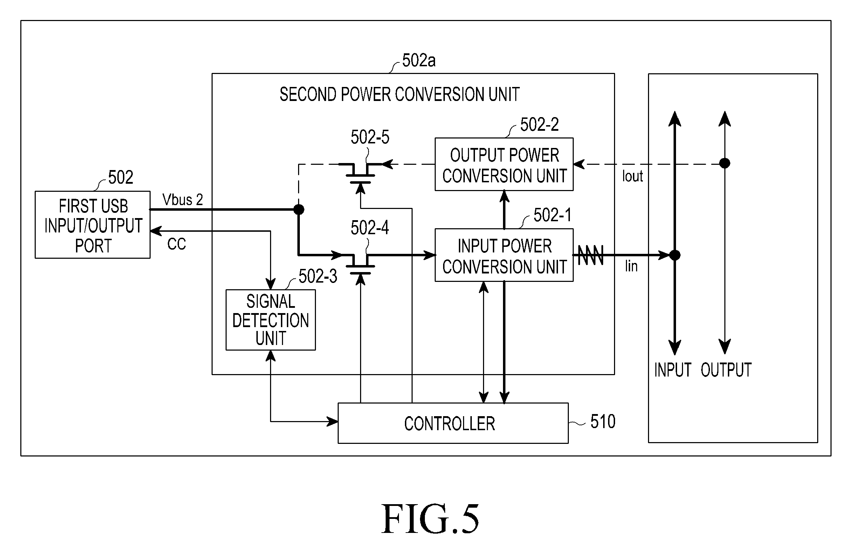

FIG. 5 illustrates a detailed configuration of a second power conversion unit corresponding to a first USB input/output port according to one embodiment of the present disclosure.

When power has been input according to FIG. 5, a first USB input/output port 502 transfers input power to a second power conversion unit 502a. In this event, a first USB input/output port 502 may transfer a detection signal to a signal detection unit 502-3 of a second power conversion unit 502a through a CC signal line connected to a controller 510, and the signal detection unit 502-3 may transfer the detection signal to the controller 510.

The controller 510 receiving the detection signal may control the second power conversion unit 502a to convert a voltage of the input power and then output the converted voltage. In this event, the controller 510 may control a switch 502-4 to allow the input power to be transferred to the input power conversion unit 502-1 of the second power conversion unit 502a.

The input power conversion unit 502-1 included in the second power conversion unit 502a may convert the voltage of the input power into a voltage which can be used in the electronic device 500, and then output the converted voltage. Specifically, the input power conversion unit 502-1 may convert the voltage of the input power into an optimal power (Vio) determined according to a conversion condition.

When the detection signal for the power output has been received, the controller 510 may control the second power conversion unit 502a to convert voltage of an output power and then output the converted voltage. In this event, the controller 510 may control a switch 502-5 to allow the output power to be transferred to the first USB input/output port 502.

When the output power has been input into the second power conversion unit 502a, the second power conversion unit 502a may convert the voltage of the output power through the output power conversion unit 502-2 and then transfer the converted voltage to the first USB input/output port 502, in order to output the output power to the first external device 410. Specifically, the output power conversion unit 502-2 of the second power conversion unit 502a may convert a voltage of the output power into a voltage which can be used in the first external device 410 connected to the first USB input/output port 502.

In the embodiment of the present disclosure, a detailed output voltage level and current may be determined on the basis of a USB PD standard.

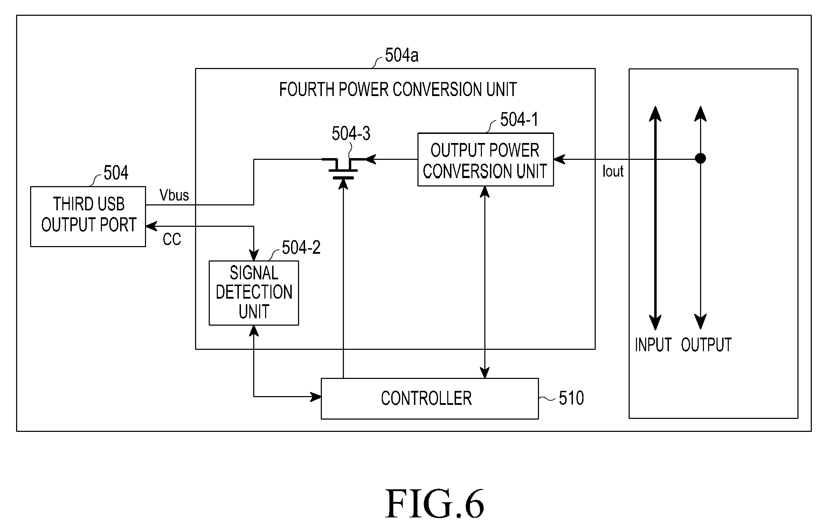

FIG. 6 illustrates a detailed configuration of a fourth power conversion unit corresponding to a third USB output port according to one embodiment of the present disclosure.

According to FIG. 6, when the detection signal for the power output has been received, a controller 510 may control a fourth power conversion unit 504a to convert a voltage of output power and then output the converted voltage. In this event, the controller 510 may control a switch 504-3 to allow output power to be transferred to a third USB output port 504.

The output power has been input into the fourth power conversion unit 504a, the fourth power conversion unit 504a may convert the voltage of the output power through the output power conversion unit 504-1 and then transfer the converted voltage to the third USB output port 504, in order to output the output power to a third external device 430. Specifically, the output power conversion unit 504-1 of the fourth power conversion unit 504a may convert a voltage of the output power into a voltage which can be used in the third external device 430 connected to the third USB output port 504.

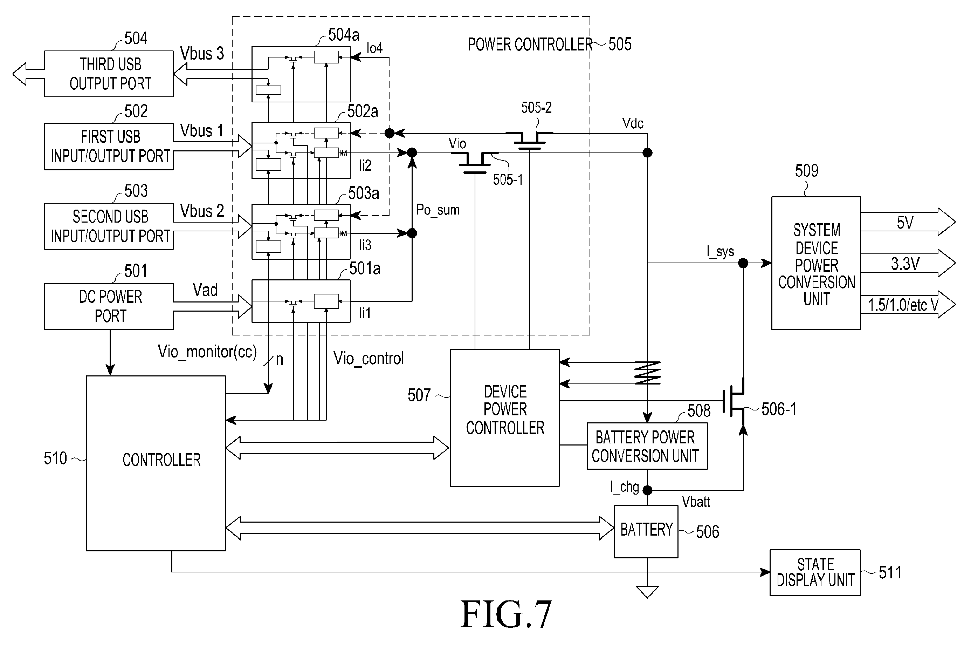

Each of power conversion units described above may be implemented in the electronic device as shown in FIG. 7, and may perform operations described in FIGS. 4 to 6.

In the embodiment of the present disclosure, the input/output ports may be selectively determined according to design costs and specifications of the system to which they will be applied, and may indicate, for example, a configuration for an AC/DC power port and a USB port for an exemplary electronic device 101 is shown in Table below.

**[Table 1]**

| Dynamic composition | Power | First port |
|---|---|---|
| | AC/DC port | First type-C |
| 1 | No input | Power output |
| 2 | | Power input |
| 3 | DC input | Power output |
| 4 | | Power input |

Table 1 illustrates an example of an electronic device including one power port and one type-C port, wherein the electronic device corresponds to an ultrathin and lightweight device and may include a product in a thin clamshell form and a tablet form.

**[Table 2]**

| Dynamic composition | Power | Second port | First port |
|---|---|---|---|
| | AC/DC port | Second type-C | First type-C |
| 1 | No input | Power output | Power output |
| 2 | | Power output | Power input |
| 3 | | Power input | Power output |
| 4 | | Power input | Power input |
| 5 | DC input | Power output | Power output |
| 6 | | Power output | Power input |
| 7 | | Power input | Power output |
| 8 | | Power input | Power input |

Table 2 illustrates an example of an electronic device having one power port and two type-C ports. Further, as shown in the example of the third dynamic configuration, even when there is no power input through the AC/DC power port, power can be supplied to an external device through a first port while power supply is received from another external device through the second port. Additionally, in the example of the fourth dynamic configuration, two sources of power are simultaneously input through the first port and the second port and are combined, thereby allowing the electronic device 101 to efficiently use input power from two sources.

**[Table 3]**

| Dynamic composition | Power | Third port | Second port | First port |
|---|---|---|---|---|
| | AC/DC port | Third type-C | Second type-C | First type-C |
| 1 | No input | Power output | Power output | Power output |
| 2 | | Power output | Power output | Power input |
| 3 | | Power output | Power input | Power output |
| 4 | | Power output | Power input | Power input |
| 5 | | Power input | Power output | Power output |
| 6 | | Power input | Power output | Power input |
| 7 | | Power input | Power input | Power output |
| 8 | | Power input | Power input | Power input |
| 9 | DC input | Power output | Power output | Power output |
| 10 | | Power output | Power output | Power input |
| 11 | | Power output | Power input | Power output |
| 12 | | Power output | Power input | Power input |
| 13 | | Power input | Power output | Power output |
| 14 | | Power input | Power output | Power input |
| 15 | | Power input | Power input | Power output |
| 16 | | Power input | Power input | Power input |

Table 3 illustrates an example of an electronic device having one power port and three type-C ports, and a plurality of type-C ports may be applied to an IT product such as a note PC and then use the IT product by spreading an application of the type-C port.

In the embodiment of the present disclosure, although power input using a barrel jack has been described, the power may be input through a port in the form of type-A and type-C supporting the USB PD instead of using the barrel jack.

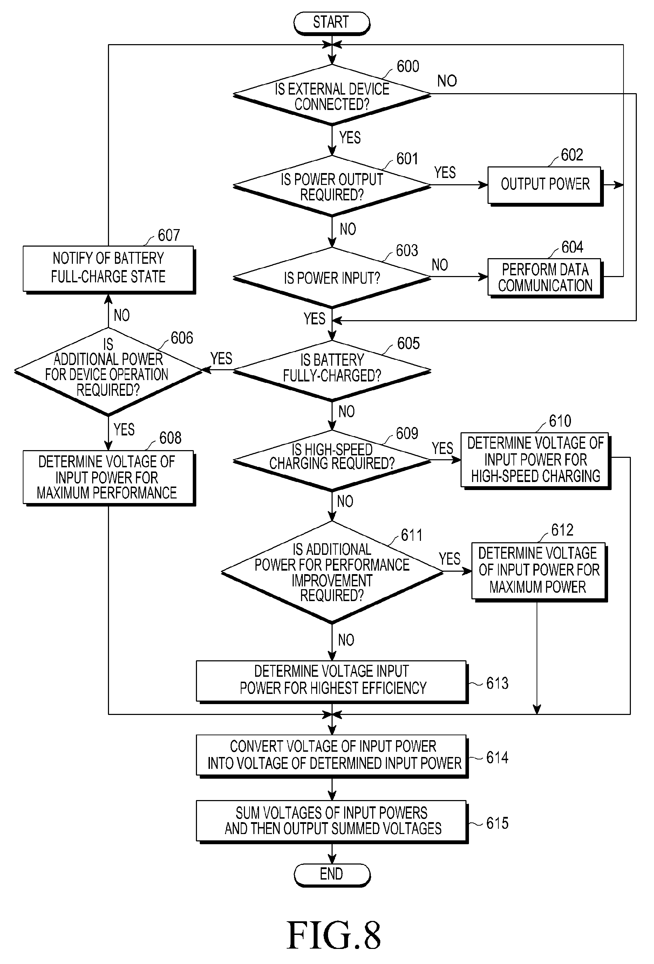

FIG. 8 is a flowchart illustrating a process of processing power input/output in a controller during the power input/output according to one embodiment of the present disclosure.

Referring to FIG. 8, in operation 600, the controller 510 determines whether the external device has been connected to the power port or the USB port. Operation 601 may be performed when the controller is connected to the external device, and operation 605 may be performed when the controller is not connected to the external device. Specifically, the controller 510 may determine whether an event, such as when the AC/DC adapter is connected to the power port or when the external device is mounted to the type-C USB port, has been detected. When the event has been detected, the operations after operation 601 may be performed.

In operation 601, the controller 510 determines whether power output is required. When the power output is required, the controller proceeds to operation 602 to output the power. In particular, when power is to be supplied to the connected external device, the controller 510 may transfer the output power to the USB port connected to the external device so that the power can be supplied to the external device. When the power output is not required, the controller proceeds to operation 603.

In operation 603, the controller 510 determines whether the power is input through the power port or the USB port. When the power has been input, the controller proceeds to operation 605. When the power has not been input, the controller performs data communication with the external device in operation 604, and then proceeds back to operation 600. In this event, when the external device connected to the USB port does not support the USB PD, power input processing is not performed, data transmission and reception may be performed, and power defined in the USB standard may be output. Further, when the external device connected to the USB port supports the USB PD, the operations after operation 605 may be performed using a USB PD protocol.

In operation 605, the controller 510 determines whether the battery 506 has been fully charged. When the battery 506 has fully been charged, the controller proceeds to operation 606. When the battery 506 has not been fully charged, the controller may perform operation 609.

In operation 606, the controller 510 determines whether an additional power for a device operation is required. When the additional power is required, the controller proceeds to operation 608. When the additional power is not required, the controller proceeds to operation 607 and may notify, through the state display unit 511, that the battery 506 is in a state of being fully charged.

In operation 608, when an additional power for performing an additional operation, such as increasing performance of a CPU and a GPU of the electronic device 500 and increasing brightness of an LCD, is required, the controller 510 may determine a voltage of an input power for maximum performance of the electronic device 500 and then proceed to operation 614.

For example, when a voltage of power which is usable in the CPU is 12V, the controller 510 may determine an optimal voltage (Vio) as 12V.

In operation 609, the controller 510 determines whether the battery 506 of the electronic device 500 is required to be high-speed charged. When the high-speed charge is required, the controller 510 proceeds to operation 610 and determines the voltage of the input power for the high-speed charge. Specifically, the controller 510 may determine the voltage of the input power as the voltage of the power usable in the battery 506. When the voltage of the power usable in the battery 506 is 20V, the controller 510 may determine the optimal voltage (Vio) for high speed charging is 20V. When the high-speed charge is not required, the controller 510 may proceed to operation 611.

In operation 611, the controller 510 determines whether an additional power for improving performance is required. When the additional power for improving performance is required, the controller proceeds to operation 612 and determines a voltage of an input power for maximum power. For example, when the voltage of the power for improving the CPU performance is 5V, the controller 510 may determine the optimal voltage (Vio) as 5V. When the additional power for improving performance is not required, the controller may proceed to operation 613.

In operation 613, the controller 510 may determine a voltage of input power for the highest efficiency. For example, when the voltage of the power required for the highest efficiency is 9V, the controller 510 may determine the optimal voltage (Vio) as 9V.

The controller 510 processing from operations 608, 610, 612, and 613 to operation 614 may control each power conversion unit to convert the voltage of the input power into the determined voltage. For example, when a voltage of a second power (Vbus2) input through the first USB input/output port 502 is 12V, a voltage of a third power (Vbus3) input through the second USB input/output port 602 is 5V, and the determined an optimal voltage (Vio) is 9V, the controller 510 may control the each power conversion unit to lower the voltage from 12V to 9V, and raise the voltage from 5V to 9V.

For the high-speed charge, when the determined optimal voltage (Vio) is 20V, the controller 510 may control the each power conversion unit to raise the voltage from 12V to 20V and raise the voltage from 5V to 20V.

In order to improve performance, when the determined optimal voltage (Vio) is 5V, the controller 510 may control each power conversion unit to lower the voltage from 12V to 5V.

In operation 615, the controller 510 may control the power controller 505 to sum input powers voltages of which have been converted, and then output a sum of the input powers. For example, the controller 510 may control the power controller 505 to sum the second power (Vbus2) input through the first USB input/output port 502 and the third power (Vbus3) input through the second USB input/output port 503, and then transfer the summed power to the battery 506 or an internal component or an external device of the electronic device.

In the embodiment of the present disclosure, even though a low-capacity AC/DC adapter is provided, since power is received through the plurality of type-C USB ports when the additional power of the electronic device 500 is required, mobility and usability of the electronic device 500 may increase.

Further, in the embodiment of the present disclosure, when high-speed charge for the battery 506 embedded in the electronic device 500 is required, power may be additionally received through the USB port. Therefore, a charge speed may be improved in a state in which internal performance or a function of the electronic device 500 is not limited.

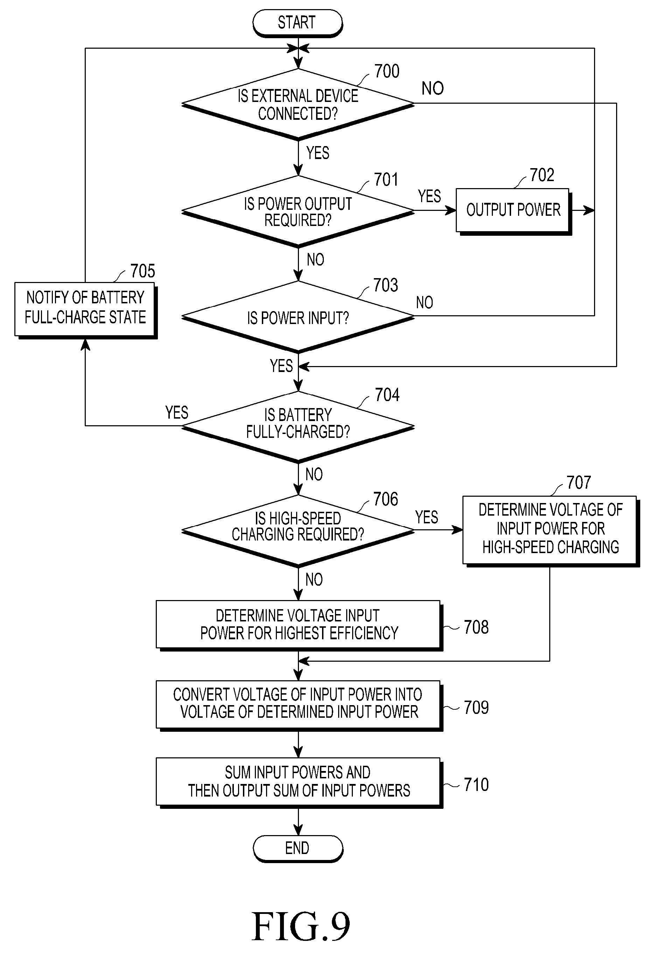

FIG. 9 is a flowchart illustrating a process of processing power input/output by a controller during the power input/output in a state in which the electronic device is not operated according to one embodiment of the present disclosure.

Referring to FIG. 9, in operation 700, the controller 510 determines whether the external device has been connected to the power port or the USB port. Operation 701 may be performed when the controller has been connected to the external device, and operation 704 may be performed when the controller has not been connected to the external device. Specifically, the controller 510 may determine whether an event, such as when the AC/DC adapter is connected to the power port or when the external device is mounted to the type-C USB port, has been detected. When the event has been detected, the operations after operation 701 may be performed.

In operation 701, the controller 510 determines whether power output is required. When the power output is required, the controller proceeds to operation 702 to output the power. In particular, when power is to be supplied the connected external device is required, the controller 510 may transfer the output power to the USB port connected to the external device so that the power can be supplied to the external device. When the power output is not required, the controller proceeds to operation 703.

In operation 703, the controller 510 determines whether the power is input through the power port or the USB port. When the power has been input, the controller proceeds to operation 704. When the power has not been input, the controller proceeds back to operation 700.

In operation 704, the controller 510 determines whether the battery 506 has been fully charged. When the battery 506 has been fully charged, the controller proceeds to operation 705 and notifies, through the state display unit 511, of that the battery 506 is in a state of being fully charged. When the battery 506 has not been fully charged, the controller may perform operation 706.

In operation 706, the controller 510 determines whether the battery 506 of the electronic device 500 is required to be high-speed charged. When the high-speed charge is required, the controller 510 proceeds to operation 707 and determines the voltage of the input power for the high-speed charge. Specifically, the controller 510 may determine the voltage of the input power as the voltage of the power usable in the battery 506. When the voltage of the power usable in the battery 506 is 20V, the controller 510 may determine the optimal voltage (Vio) for high speed charging is 20V. When the high-speed charge is not required, the controller 510 may proceed to operation 708.

In operation 708, the controller 510 may determine a voltage of an input power for the highest efficiency. For example, when the voltage of the power required for the highest efficiency is 12V, the controller 510 may determine the optimal voltage (Vio) as 12V.

The controller 510 processing from operations 707 and 708 to operation 709 may control each power conversion unit to convert the voltage of the input power into the determined voltage. For example, when voltage of a second power (Vbus2) input through the first USB input/output port 502 is 12V, voltage of a third power (Vbus3) input through the second USB input/output port 503 is 5V, and the optimal voltage (Vio) determined for the high-speed charge is 20V, the controller 510 may control the each power conversion unit to raise the voltage from 12V to 20V, and raise the voltage from 5V to 20V. Further, for the highest efficiency, when the determined optimal voltage (Vio) is 12V, the controller 510 may control the each power conversion unit to raise the voltage from 5V to 12V.

In operation 710, the controller 510 may control the power controller 505 to sum input powers voltages of which have been converted, and then output a sum of the input powers.

As described above, in various embodiments of the present disclosure, powers input through the USB power input/output port and the power port may be summed, thereby supplying a high-capacity power required in the electronic device.

Further, in various embodiments of the present disclosure, a plurality of power inputs from an external device such as a small-sized laptop, a tablet PC, or a smart phone are combined, and then a high-capacity power for maximum performance of the electronic device is supplied or power is received in a state in which performance or a function of the electronic device is not limited so that the charge speed of the battery included in the electronic device may be improved.

Further, in various embodiments of the present disclosure, even though a high-capacity AC/DC adapter is not used, since high-capacity power using the type-C USB power input/output port can be secured whenever and wherever it is required, the mobility of the electronic device can be improved and design costs can be reduced.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, or a combination hardware configured with machine executable code and may be performed in whole or in part within the programmed instructions of a computer. No claim element herein is to be construed under the provisions of 35 U.S.C. 112, sixth paragraph, unless the element is expressly recited using the phrase "means for."

## Claims

1. An electronic device for controlling power, the electronic device chacracter by:
a plurlaity of ports (501-504)configured to input power into the electronic device;
a power controller (505) that includes a first power conversion unit (501a)configured to convert a first power supplied from a first external device connected to a first port, and a second power conversion unit (502a) configured to convert a second power supplied from a second external device connected to a second port; and
a controller (510) that controls the power controller to selectively supply power to a target device by summing the first power and the second power.

2. The electronic device of claim 1, **characterized in that** the controller controls the power controller to:
determine whether a conversion for at least one voltage of a voltage of the first power and a voltage of the second power is required; and
convert the at least one voltage when the conversion is requried.

3. The electronic device of claim 2, **characterized in that** when the target device is a battery (506), the controller controls the power controller to:
determine whether charging of the battery is required; and
convert the at least one voltage of the voltage of the first power and the voltage of the second power into the voltage of the battery.

4. The electronic device of claim 2, **characterized in that** when the target device is a third external device, the controller controls the power controller to:
determine whether supplying power to the third external device is required; and
convert the at least one voltage of the voltage of the first power and the voltage of the second power into the voltage of the third external device.

5. The electronic device of claim 2, **characterized in that** when the target device is an internal component of the electronic device, the controller controls the power controller to:
determine whether supplying additional power to the internal component is required; and
convert the at least one voltage of the voltage of the first power and the voltage of the second power into the voltage of the internal component.

6. The electronic device of claim 1, **characterized in that** the first port and second port include at least two selected from a power port, a USB input/output port, a USB input port, and a USB output port.

7. The electronic device of claim 6, **characterized in that** the USB input/output port is implemented in a USB type-C form.

8. A method of controlling power in an electronic device, the method **characterized by**:
receiving a first power from a first external device connected to a first port configured to input power into the electronic device;
receiving a second power from a second external device connected to a second port configured to input power into the electronic device;
converting at least one of the first power and the second power; and
selectively supplying power to a target device by summing the first power and the second power.

9. The method of claim 8, **characterized in that** the converting at least one of the first power and the second power comprises:
determining wether a conversion for at least one voltage of a voltage of the first power and a voltage of the second power is required; and
converting the at least one voltage when the conversion is requried.

10. The method of claim 9, **characterized in that** when the target device is a battery, the determining of whether the conversion for the at least one voltage is required comprises:
determining whether charging of the battery is required; and
converting the at least one voltage of the voltage of the first power and the voltage of the second power into the voltage of the battery.

11. The method of claim 9, **characterized in that** when the target device is a third external device, the determining of whether the conversion for the at least one voltage is required comprises:
determining whether supplying power to the third external device is required; and
converting the at least one voltage of the voltage of the first power and the voltage of the second power into the voltage of the third external device.

12. The method of claim 9, **characterized in that** when the target device is an internal component of the electronic device, the determining of whether the conversion for the at least one voltage is required comprises:
determining whether supplying additional power to the internal component is required; and
converting the at least one voltage of the voltage of the first power and the voltage of the second power into the voltage of the internal component.

13. The method of claim 8, **characterized in that** the first port and second port include at least two selected from a power port, a USB input/output port, a USB input port, and a USB output port.

14. The method of claim 13, **characterized in that** the USB input/output port is implemented in a USB type-C form.

15. A computer readable recording medium in which instructions are stored and a program for executing operations is recorded, the operations **characterized by**:
receiving a first power from a first external device connected to a first port configured to input power into an electronic device;
receiving a second power from a second external device connected to a second port configured to input power into an electronic device;
converting at least one of the first power and the second power; and
selectively supplying power to a target device by summing the first power and the second power.
